# EUROPÄISCHE PATENTSCHRIFT

(11) **EP 0 816 156 B1**
(45) Veröffentlichungstag und Bekanntmachung des Hinweises auf die Patenterteilung: **16.10.2002**
(21) Anmeldenummer: 97110854.3
(22) Anmeldetag: 01.07.1997
(51) Int. Cl.: B60K 41/00, B60K 26/02

(54) **Enrichtung zum manuellen Gasgeben bei Kraftfahrzeugen**
Mechanism for hand operation of vehicle engine throttle
Dispositif permettant l'actionnement manuel d'un organe de commande moteur d'un véhicule

(30) Priorität: 02.07.1996 DE 19626625
(43) Veröffentlichungstag der Anmeldung: 07.01.1998
(73) Patentinhaber: Kempf, Martine, Sunnyvale, CA 94086 (US)
(72) Erfinder: Kempf, Martine, Sunnyvale, CA 94086 (US)
(74) Vertreter: von Puttkamer, Nikolaus, Dipl.-Ing.

(56) Entgegenhaltungen:
- EP-A- 0 634 301
- EP-A- 0 647 540

## Beschreibung

Die Erfindung betrifft eine Einrichtung zum manuellen Gasgeben bei Kraftfahrzeugen nach dem Oberbegriff des Patentanspruches 1.

Aus der französischen Patentschrift 1 135 356 geht eine solche Einrichtung hervor, die die Form eines Handgasringes aufweist, der konzentrisch zum Lenkrad eines Kraftfahrzeuges angeordnet ist, wobei der Handgasring mittig mit einer Stange verbunden ist, die durch die hohle Lenksäule des Lenkrades verläuft. Die Stange ist dabei so gelagert, daß der Handgasring relativ zum Lenkrad frei verdrehbar ist. Zum Gasgeben wird der Handgasring gegen einen Energiespeicher aus der Nullstellung nach unten, in Richtung auf das Nabenteil des Lenkrades gedrückt, wobei der Hub der Stange über eine geeignete Mechanik das Gaspedal betätigt. Bei der Freigabe des Lenkgasringes führt der Energiespeicher diesen in die Nullstellung zurück.

Ein wesentlicher Vorteil des bekannten Handgasringes besteht darin, daß er unabhängig vom Lenkrad verdrehbar ist. Dies ermöglicht es, daß der Handgasring festgehalten und das Lenkrad losgelassen werden kann, wenn das Kraftfahrzeug, z.B. aus einer engen Kurve herausfährt, wobei das Lenkrad alleine in die Ausgangsstellung zurückkehrt und dann wieder angefaßt werden kann. Bei einer normalen Fahrt beispielsweise auf der Autobahn verbleiben beide Hände am Lenkrad und gleichzeitig am niedergedrückten Handgasring. Der beschriebene bekannte Handgasring eignet sich insbesondere auch für den Motorsport (z.B. Bergrennen etc.).

Der beschriebene bekannte Handgasring kann bei den heutigen Kraftfahrzeugen nicht angewendet werden, bei denen mittig in dem vom Lenkrad umschlossenen Raum ein Airbag angeordnet ist.

Für mit einem Airbag im Lenkrad ausgerüstete Fahrzeuge wurde eine Einrichtung vorgeschlagen, bei der konzentrisch zum Lenkrad eine Reihe von kleinen Tasthebeln angeordnet sind, die den Blick auf die hinter dem Lenkrad befindlichen Armaturen bzw. Anzeigegeräte in der Nullstellung des Lenkrades freigeben, weil die genannten Tasthebel U-förmig auf einem Teilkreisbogen angeordnet sind. Bei der Betätigung eines Tasthebels wird der am Lenkrad befestigte Teilkreisbogen, der zusammen mit dem Lenkrad drehbar ist und den Airbag umgibt, durch eine Kippbewegung niedergedrückt. Der Druck wird auf ein Potentiometer zur Erzeugung eines elektrischen Signales übertragen. Aufgrund des erzeugten elektrischen Signales wird das Gaspedal betätigt. Ein Problem dieser bekannten Einrichtung besteht darin, daß die Tasthebel nicht um den gesamten Innenumfang des Lenkrades herum angeordnet sind, damit zumindest in der Nullstellung des Lenkrades der Blick auf die Armaturen bzw. Anzeigegeräte freigegeben wird. Aus diesem Grunde ist die Bedienung der Tasthebel auf einen Bereich beschränkt, der erheblich kleiner als 360° ist. Beim Lenken werden die Tasthebel zumindest teilweise so gedreht, daß sie die genannten Anzeigegeräte verdecken. Da der die Tasthebel tragende Teilkreisbogen in Bezug auf das Lenkrad nicht frei drehbar ist, können die im Zusammenhang mit der FR-PS 1 135 356 beschriebenen Vorteile beim Lenken des Kraftfahrzeuges nicht erreicht werden. Ein weiteres Problem besteht darin, daß die genannten Tasthebel, die die Form von Aluminiumteilen aufweisen, relativ groß und sperrig sind, so daß sie im Falle eines Unfalles nicht nachgeben. Verletzungen, insbesondere im Kopfbereich, sind daher zu befürchten.

Eine weitere Einrichtung nach dem Oberbegriff des Anspruchs 1 ist aus der EP-0 634 301 bekannt.

Die Aufgabe der vorliegenden Erfindung besteht darin, eine Einrichtung der eingangs genannten Art dahingehend zu verbessern, daß sie bei Kraftfahrzeugen verwendbar ist, die in dem vom Lenkrad umschlossenen Raum einen Airbag aufweisen, wobei gleichzeitig die durch eine freie Drehung des bekannten Handgasringes im Hinblick auf die Lenkung erzielbaren Vorteile erreichbar sind.

Diese Aufgabe wird durch eine Einrichtung mit den Merkmalen des Patentanspruches 1 gelöst.

Der wesentliche Vorteil besteht darin, daß der Handgasring der erfindungsgemäßen Einrichtung in Bezug auf das Lenkrad frei drehbar ist, so daß das Fahrzeug besonders gut lenkbar ist. Insbesondere ist das Fahrzeug beim Ausfahren aus engen Kurven gut steuerbar. Ein mit der vorliegenden Einrichtung ausgerüstetes Fahrzeug kann daher von Behinderten auch für den Rennsport, beispielsweise für Bergfahrten, verwendet werden. Neben den Vorteilen für die Lenkung besteht ein weiterer Vorteil darin, daß der Handgasring der erfindungsgemäßen Einrichtung geschlossen ist und daher von allen Seiten bedient werden kann. Vorteilhafterweise ist die vorliegende Einrichtung so gestaltet, daß sie in den bestehenden Raum zwischen einem Airbag und einem Lenkrad ohne weiteres integriert werden kann, wobei ein ausreichend großer Hub des Betätigungsorganes erzielbar ist. Dabei ist das Betätigungsorgan in dem Abstand zwischen dem Nabenteil des Lenkrades im Bereich der Lenksäule und dem Boden des Airbags anordenbar, der im ungünstigsten Fall etwa nur 15 mm beträgt. Ein wesentlicher Vorteil besteht darin, daß bei der erfindungsgemäßen Vorrichtung im Falle eines Unfalles das gesamte Ringteil parallel zur Lenksäule nach innen geschoben wird, wobei der gesamte Gelenkmechanismus innerhalb des Lenkrades im Raum zwischen dem Airbag und dem Nabenteil des Lenkrades angeordnet ist. Das Ringteil verbiegt sich bei einem Aufprall, wobei das Überzugteil des Ringteiles eine polsternde Wirkung entfaltet. Verletzungen durch vorstehende und nicht nachgiebige Teile sind daher nicht zu befürchten. Bei einem Aufprall verschwindet die gesamte Einrichtung hinter dem Nieveau des Lenkradkranzes. Ein weiterer Vorteil besteht darin, daß die erfindungsgemäße Einrichtung einfach aufgebaut ist und auch leicht in bestehende Kraftfahrzeuge nachgerüstet werden kann. Vorteilhafterweise kann mit dem Betätigungsorgan der erfindungsgemäßen Einrichtung eine Mechanik zum Stellen des Gaspedales und/oder ein elektrisches Potentiometer, beispielsweise ein Linearpotentiometer, zur Erzeugung eines Stellsignales betätigt werden. Der Handgasring der erfindungsgemäßen Einrichtung ist so beschaffen, daß er die Fahrzeugarmaturen so wenig wie möglich verdeckt.

Vorteilhafte Ausgestaltungen der Erfindung gehen aus den Unteransprüchen hervor.

Im folgenden werden die Erfindung und deren Ausgestaltungen im Zusammenhang mit den Figuren näher erläutert. Es zeigen:
- Fig. 1: in perspektivischer Darstellung eine Ausführungsform einer erfindungsgemäßen Einrichtung, die in dem von einem Lenkrad umschlossenen Innenraum eingebaut ist, wobei der in diesem Innenraum angeordnete Airbag nicht dargestellt ist;
- Fig. 2: einen Schnitt durch die Anordnung der Figur 1 entland der Linie II-II, wobei der Airbag dargestellt ist; und
- Fig. 3 bis 6: Ausgestaltungen der Anordnungen von Betätigungsorganen und
- Fig. 7A, B: eine weitere Ausgestaltung der Verbindung zwischen dem ersten und zweiten Stangenteil.

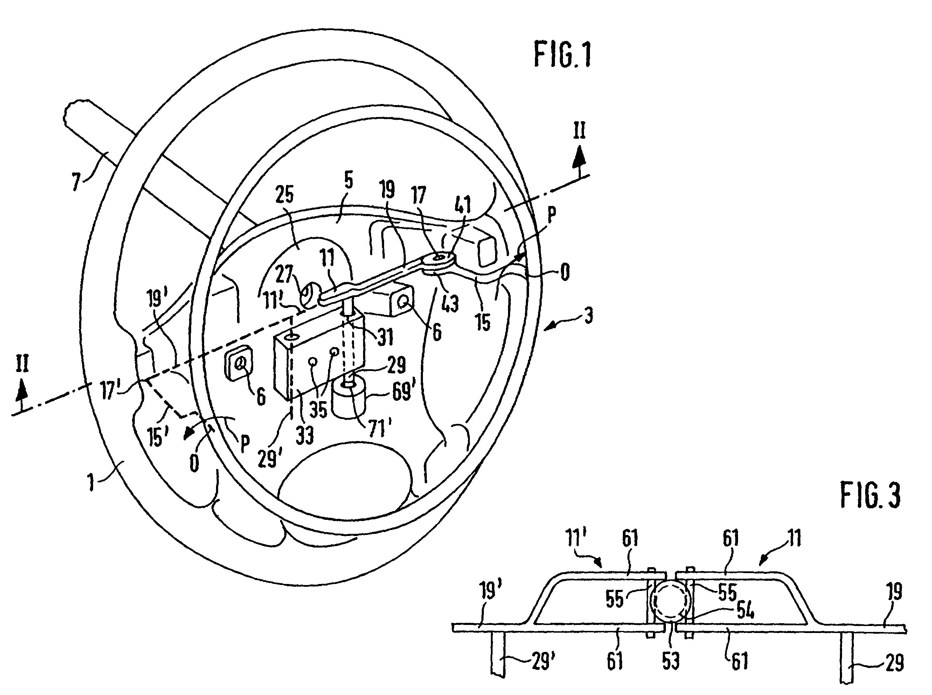

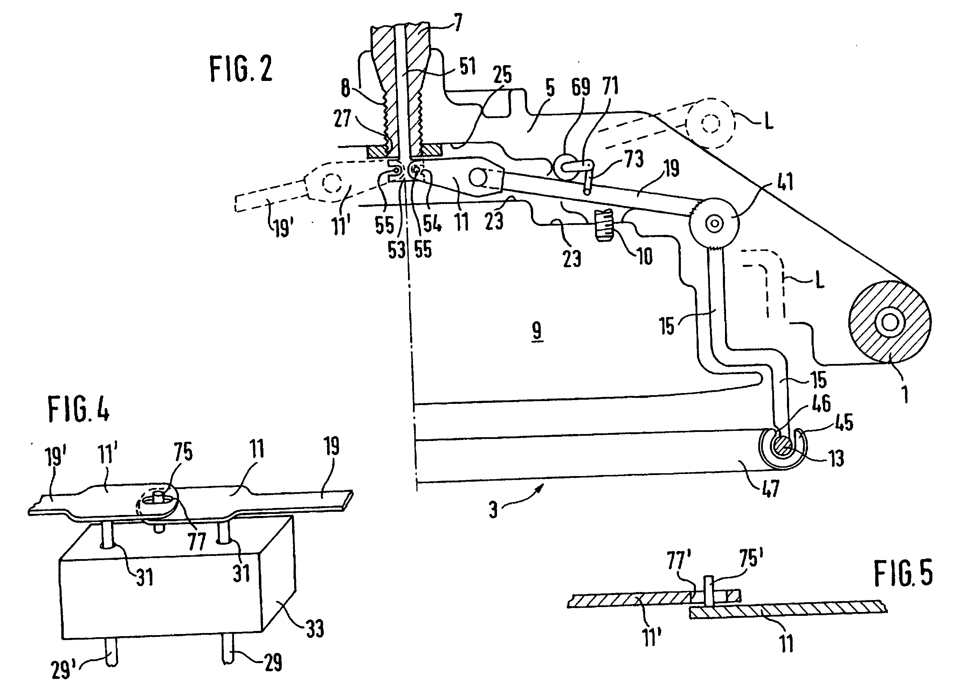

In der Figur 1 ist das Lenkrad eines Kraftfahrzeuges mit 1 bezeichnet. Das Lenkrad 1 ist an einem Nabenteil 5 befestigt, das wiederum an einer in der Figur 1 schematisch dargestellten Lenksäule 7 montiert ist. In dem von dem Lenkrad 1 und dem Nabenteil 5 umschlossenen Innenraum befindet sich gemäß Figur 2 ein Airbag 9.

Die vorliegenden Einrichtung weist im wesentlichen gemäß Figur 1 einen Handgasring 3, ein Gelenkgestänge und ein Betätigungsorgan 11 auf. Das Gelenkgestänge umfaßt ein erstes mit einem Ringteil 13 des Handgasringes 3 verbundenes Stangenteil 15 auf, das ausgehend vom Handgasring 3 bzw. vom Ringteil 13 seitlich an dem Airbag 9 in dem zwischen dem Nabenteil 5 und dem Airbag 9 gebildeten Zwischenraum zur Seite der Lenksäule 7 hindurchverläuft. Zur Anpassung an den genannten Zwischenraum kann das erste Stangenteil 15 gebogen sein. Das freie Ende des ersten Stangenteiles 15 ist um einen Drehpunkt 17 verschwenkbar in Bezug auf das eine Ende eines zweiten Stangenteiles 19 gelagert, das ausgehend vom Drehpunkt 17 in den Raum 21 hineinverläuft, der zwischen dem Boden 23 des Airbags 9 und dem die Lenksäule 7 umgebenden Bereich 25 des Nabenteiles 5 besteht. Dieser Raum 21 weist bei bestehenden Lenkradanordnungen in der Richtung der Achse der Lenksäule 7 eine Abmessung auf, die in der Größenordnung von wenigstens etwa 15 mm liegt. In der aus der Figur 2 ersichtlichen Weise ist das Nabenteil 5 auf einem Außengewinde 8 der Lenksäule 7 verschraubt. Der Airbag 9 ist mit der Hilfe von Befestigungsschrauben 10 in Bohrungen 6 verschraubt, die sich in Vorsprüngen 12 des Nabenteiles 5 befinden, die den genannten Abstand zwischen dem Boden 23 des Airbags 9 und dem an die Lenksäule 7 angrenzenden Bereich 25 herstellen.

Das freie Ende des zweiten Stangenteiles 19 bildet das Betätigungsorgan 11, das bis in den Bereich einer Öffnung 27 ragt, die sich in dem Nabenteil 5 befindet und einen Zugang zum Inneren der Lenksäule 7 ermöglicht. Im Bereich des Betätigungsorganes 11 ist das zweite Stangenteil 19 mit einem mit ihm verbundenen Stabteil 29 in einer Bohrung 31 eines Halteblockes 33 gelagert, der am Bereich 25 des Nabenteiles 5 befestigt ist. Zu diesem Zweck befinden sich im Halteblock 33 Bohrungen 35, durch die hindurch Befestigungsschrauben (nicht dargestellt) verlaufen, die in dem Bereich 25 verschraubt werden. Das Stabteil 29 erstreckt sich senkrecht zur Längsachse des zweiten Stangenteiles 19. Während in der Figur 1 nur das das erste Stangenteil 15, das zweite Stangenteil 19, das Betätigungsorgan 11 und das Stabteil 29 aufweisende Gelenkgestänge dargestellt ist, befindet sich am Ringteil 13 gegenüberliegend ein zweites Gelenkgestänge, das aus einem dritten Stangenteil 15', das dem Stangenteil 15 entspricht, einem vierten Stangenteil 19', das dem zweiten Stangenteil 19 entspricht, und einem Betätigungsorgan 11' besteht, das ebenfalls in den Bereich der Öffnung 27 ragt und dem Betätigungsorgan 11 entspricht. Das vierte Stabteil 19' ist mit der Hilfe eines in eine Bohrung 31 des Halteblockes 33 eingesetzten Stabteiles 29', das dem Stabteil 29 entspricht, gelagert. Das dritte Stangenteil 15' und das vierte Stangenteil 19' sind um einen Drehpunkt 17' verdrehbar gelagert. Vorzugsweise werden die Drehpunkte 17 und 17' dadurch gebildet, daß an den entsprechenden Enden der Stangenteile 15, 15' und 19, 19' jeweils ein Flansch 41 bzw. 43 angeordnet ist, die jeweils zueinander ausgerichtete Bohrungen 44 aufweisen, durch die ein den Drehpunkt 17, 17' bildender Zapfen geführt ist.

Auf das an den Stangenteilen 15, 15' befestigte Ringteil 13 ist ein in der Umfangsrichtung des Ringteiles 13 frei auf diesem verschiebbares ringförmiges Schalenteil 45 aufgesetzt, das vorzugsweise an seiner den Stangenteilen 15 und 15' zugewandten Seite einen ringförmigen Schlitz 46 aufweist, durch den hindurch die genannten Stangenteile 15, 15' nach außen verlaufen. Vorzugsweise ist das Schalenteil 45, das aus einem Kunststoffmaterial besteht, mit einem polsternden ringförmigen Überzugteil 47 bezogen.

Beim Betätigen des Handgasringes 3 aus der Leerlaufstellung zur Vollgasstellung, d.h. also wenn derselbe durch Kraftbeaufschlagung in Richtung auf die Lenksäule 7 gedrückt wird, bewegen sich die Stangenteile 15, 15' und 19, 19' in der in der Figur 2 durch unterbrochene Linien L dargestellten Weise in den Zwischenraum zwischen dem Airbag 9 und dem Nabenteil 5 hinein, wobei sich die Stangenteile 19, 19' um die Drehpunkte 17, 17' und die Stabteile 29, 29' in den Bohrungen 31 drehen. Dabei werden die Betätigungsorgane 11, 11' um die durch die Stabteile 29, 29' gebildeten Drehpunkte mit ihren freien Enden vom Nabenteil 5 wegbewegt. Diese Bewegung wird zur Betätigung des Gaspedales auf mechanische und/oder elektrische Weise ausgenutzt.

Bei der Bewegung des genannten Handgasringes 3 in Richtung auf das Lenkrad 1 ist es von Bedeutung, daß der Handgasring 3 so elastisch ist, daß er eine die Verdrehung der Stangenteile 15, 19 und 15', 19' um die Achse des Stabteiles 29, 29' ermöglichende federnde Verformung zuläßt. Genauer gesagt wird bei dieser Bewegung der Handgasring bis zur maximalen Auswärtsbewegung des Drehpunktes 17, 17' um die Befestigungsorte O der Stangenteile 15, 15' am Ringteil 13 elastisch verdreht (Pfeile P in Figur 1), so daß das Ringteil 13 insgesamt aus seiner Ebene in Richtung auf die Lenksäule 7 herausgebogen wird.

Bei einer mechanischen Betätigung des Gaspedales befindet sich im Innern der Lenksäule 7 in der aus der Figur 2 ersichtlichen Weise eine Steuerstange 51, die durch das Betätigungsorgan 11, 11' axial bewegt wird. Zu diesem Zweck weist die Steuerstange 51 ein im Raum zwischen dem Bereich 25 des Nabenteiles 5 und dem Boden 23 des Airbags 9 befindliches Kopfteil 53 auf, das eine Umfangsnut 54 besitzt, in die ein Stift 55 des Betätigungsorganges 11, 11' eingreift. Die Steuerstange 51 wird daher zur Betätigung des Gases nach vorne gezogen, wenn der Handgasring 3 in Richtung auf den Airbag gedrückt wird.

Besonders bevorzugt weist das Betätigungsorgan 11, 11' gemäß Figur 3 die Form eines Gabelteiles auf, wobei die Stifte 55 jeweils in gegenüberliegenden Bereichen der Gabelteile 61, 61 befestigt sind, die zwischen sich das Kopfteil 53 aufnehmen.

Wenn zur Betätigung des Gases ein elektrisches Signal mit der Hilfe eines Potentiometers 69 erzeugt werden soll, wird der Stellarm 71 dieses Potentiometers 69 mechanisch an ein Betätigungsorgan 11 oder 11' oder an eine Steuerstange 19, 19' gekoppelt. In der Figur 2 ist ein solches Potentiometer 69 dargestellt, dessen Stellarm 71 über eine Stellstange 73 an das Stangenteil 19 gekoppelt ist. Bei der Betätigung des Handgasringes 3 wird das Stangenteil 19 in die durch die unterbrochene Linie L gezeigte Stellung verschwenkt, wobei der Stellhebel 71 zur Erzeugung des elektrischen Signales gedreht wird.

Wenn durch die Betätigung des Gases ausschließlich die Erzeugung eines elektrischen Signales bewirkt wird, kann die Steuerstange 51 mit dem Kopfteil 53 entfallen. In diesem Falle werden gemäß Figur 4 die einander zugewandten Enden der Betätigungsorgane 11, 11' über einen Verbindungszapfen 75 aneinander gekoppelt. Dabei ist der Verbindungszapfen 75 durch Langlöcher 77 geführt, die sich in den Stellorganen 11, 11' befinden.

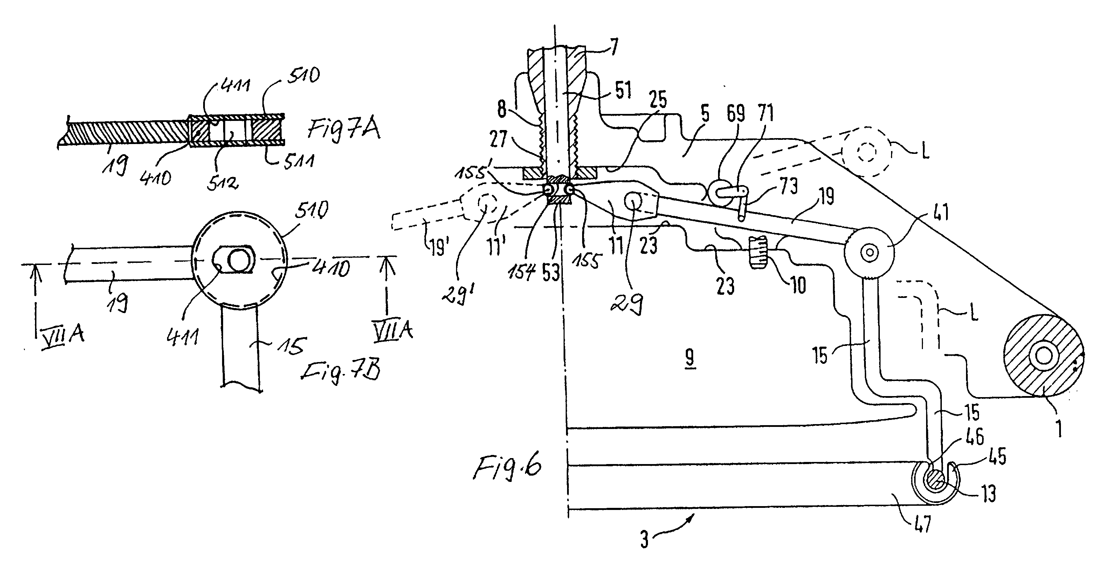

Gemäß Figur 5 kann der Verbindungszapfen 75' auch an einem Betätigungsorgan 11 befestigt sein und in ein Langloch 77' des anderen Betätigungsorganes 11' eingreifen. Besonders günstig ist eine Ausführungsform, bei der das Stabteil 29 und/oder 29' ein Drehpotentiometer 69' (Figur 1) betätigt. Zu diesem Zweck greift das Ende des Stabteiles 29, 29' direkt an der Drehachse 71' des Drehpotentiometers drehfest an. Eine radiale Belastung des Drehpotentiometers 69' wird dadurch verhindert.

Es wird darauf hingewiesen, daß anstelle des beschriebenen Mechanismus, der die Bewegung des Handgasringes auf das Betätigungsorgan überträgt auch andere Vorrichtungen in dem Raum zwischen dem Airbag und dem Nabenteil vorgesehen sein können.

Gemäß Figur 6 weist die Steuerstange 51 an ihrem Endbereich bzw. Kopfteil 53 anstelle der Umfangsnut 54 (Fig. 2) eine Querbohrung 154 auf, in die von jeder Seite her ein Kugelteil 155, 155' eingreift, das an dem freien Ende des Betätigungsorganges 11 bzw. 11' befestigt ist. Die Kugelteile 155, 155' werden zweckmäßigerweise durch Stahlkügelchen gebildet, die vorzugsweise einen Durchmesser von etwa 4 mm besitzen und an den Betätigungsorgangen 11 verschweißt sind. Einzelheiten der Figur 6, die bereits im Zusammenhang mit den anderen Figuren erläutert wurden, sind in der entsprechenden Weise bezeichnet.

Im Zusammenhang mit den Figuren 7A und 7B wird nun eine Ausführungsform erläutert, bei der das Drehgelenk 41 zwischen dem ersten Stangenteil 15 und dem zweiten Stangenteil 19 so ausgebildet ist, daß von dem zweiten Stangenteil 19 auf das erste Stangenteil 15 und daher auf das Ringteil 13 keine Kräfte übertragen werden, die auf eine Drehung des zweiten Stangenteiles 19 um den Drehpunkt 29 zurückzuführen sind.

Zu diesem Zweck weist das erste Stangenteil 15 an seinem dem zweiten Stangenteil zugewandten Ende einen Flansch 410 auf, in dem ein Langloch 411 vorgesehen ist. Das zweite Stangenteil 19 weist an seiner dem ersten Stangenteil 15 zugewandten Seite ein aus einem oberen Flansch 510 und einem deckungsgleich dazu angeordneten unteren Flansch 511 bestehendes Gabelteil auf, zwischen denen der Flansch 410 des ersten Stangenteiles 15 eingreift. Die Flansche 510, 511 und 410 sind dabei parallel zueinander ausgerichtet. Vom oberen Flansch 510 zum unteren Flansch 511 des zweiten Stangenteiles 19 verläuft ein das Langloch 411 des Flansches 410 durchgreifender Stift 511, der vorzugsweise am oberen Flanschteil 510 und am unteren Flanschteil 511 befestigt ist. Durch diese Anordnung wird erreicht, daß bei einer Drehung der Flanschteile 510, 511 und des Stiftes 512 um die Achse 29 der Stift 512 in dem Langloch 411 verschoben wird, so daß keine auf diese Drehung zurückzuführende Kraft auf das erste Stangenteil 15 übertragen wird. Auf diese Weise wird eine Verformung des Ringteiles 13 vermieden.

Vorzugsweise verläuft das Langloch 411 entlang der Längsachse des zweiten Stangenteiles 19, wenn sich das erste und das zweite Stangenteil senkrecht zueinander erstrecken. Es wird darauf hingewiesen., daß das Gabelteil auch am ersten Stangenteil 15 und der Flansch 410 am zweiten Stangenteil 19 angeordnet sein können. Auch können das Langloch dem ersten Stangenteil 15 und der Stift dem zweiten Stangenteil 19 zugeordnet sein.

## Patentansprüche

1. Einrichtung zum manuellen Gasgeben bei Kraftfahrzeugen mit einem Lenkrad (1), einem mit dem Lenkrad (1) verbundenen Nabenteil (5) und einem gegen die Kraft eines Energiespeichers bewegbaren Handgasring (3), der auf ein Betätigungsorgan (11, 11', 69, 71, 73) einwirkt, wobei zwischen dem Handgasring (3) und dem Betätigungsorgan (11, 11', 69, 71, 73) ein Mechanismus (15, 17, 19, 29) vorgesehen ist, **dadurch gekennzeichnet, dass** ein Airbag in dem vom Lenkrad (1) und von dem Nabenteil (5) umschlossenen Innenraum angeordnet ist, dass der Handgasring (3) ein mit dem Mechanismus fest verbundenes Ringteil (13) aufweist und dass der Mechanismus in dem Raum zwischen dem Airbag (9) und dem Nabenteil (5) angeordnet ist.

2. Einrichtung nach Anspruch 1, **dadurch gekennzeichnet, daß** der Mechanismus (15, 17, 19, 29) ein aus einem ersten Stangenteil (15), das mit seinem einen Ende an dem Ringteil (13) befestigt ist, einem zweiten Stangenteil (19), das mit seinem einen Ende um einen Drehpunkt (17) verschwenkbar mit dem anderen Ende des ersten Stangenteiles (15) verbunden ist und einem Stabteil (29) bestehender Gelenkmechanismus ist, daß das Stabteil (29) mit dem Endbereich des anderen Endes des zweiten Stangenteiles (19) verbunden ist, sich senkrecht zur Achse des Lenkrades (1) erstreckt und an dem Nabenteil (5) um seine Längsachse verschwenkbar gelagert ist.

3. Einrichtung nach Anspruch 2, **dadurch gekennzeichnet, daß** das Stabteil (29) in einer Bohrung (31) eines am Nabenteil (5) befestigten Halteblockes (33) gelagert ist.

4. Einrichtung nach Anspruch 2 oder 3, **dadurch gekennzeichnet, daß** dem Gelenkmechanismus (15, 17, 19, 29) diametral gegenüberliegend am Handgasring (3) ein weiterer entsprechender Gelenkmechanismus (15', 17', 19', 29') mit einem ersten Stangenteil (15'), einem zweiten Stangenteil (19'), einem Drehpunkt (17') und einem Stabteil (29') vorgesehen ist.

5. Einrichtung nach einem der Ansprüche 1 bis 4, **dadurch gekennzeichnet, daß** auf dem Ringteil (13) in der Umfangsrichtung desselben frei verschiebbar ein ringförmiges Schalenteil (45) angeordnet ist.

6. Einrichtung nach einem der Ansprüche 1 bis 5, **dadurch gekennzeichnet, daß** das Betätigungsorgan (11) die Form eines durch den Gelenkmechanismus betätigbaren Teiles aufweist, das an eine Steuerstange (51) mechanisch gekoppelt ist, die sich im Inneren der Lenksäule (7) des Lenkrades (1) befindet.

7. Einrichtung nach Anspruch 6, **dadurch gekennzeichnet, daß** das Teil mit dem anderen Ende der zweiten Steuerstange (19, 19') verbunden ist, und zu der dem Drehpunkt (17, 17') abgewandten Seite über das Stabteil (29, 29') hinausragt und mechanisch an ein mit der Steuerstange (51) verbundenes Kopfteil (53) gekoppelt ist, das sich in dem Raum zwischen dem die Lenksäule (7) umgebenden Bereich (25) des Nabenteiles (5) und dem Boden (23) des Airbags (9) befindet.

8. Einrichtung nach Anspruch 7, **dadurch gekennzeichnet, daß** das Kopfteil (53) eine Umfangsnut (54) aufweist, in die ein mit dem Betätigungsorgan (11) verbundener Stift (54) eingreift.

9. Einrichtung nach Anspruch 7, **dadurch gekennzeichnet, daß** das Kopfteil (53) eine Querbohrung (154) aufweist, in die ein mit dem Betätigungsorgan (11) verbundenes Kugelteil (155) eingreift.

10. Einrichtung nach Anspruch 8, **dadurch gekennzeichnet, daß** das Betätigungsorgan (11) an seinem freien Ende zwei voneinander beabstandete Teile (61, 61) aufweist, die zwischen sich einen seitlichen Bereich des Kopfteiles (53) derart aufnehmen, daß der zwischen ihnen gehaltene Stift (55) in die Umfangsnut (54) des Kopfteiles (3) eingreift.

11. Einrichtung nach einem der Ansprüche 1 bis 10, **dadurch gekennzeichnet, daß** zur Erzeugung eines elektrischen Stellsignales für einen das Gaspedal betätigenden Antrieb ein an die Bewegung des Gelenkmechanismus gekoppeltes elektrisches Potentiometer (69) als Betätigungsorgan vorgesehen ist.

12. Einrichtung nach Anspruch 11, **dadurch gekennzeichnet, daß** ein Stellarm (71) des Potentiometers (69) mit der zweiten Steuerstange (19, 19') oder mit dem Betätigungsorgan (11, 11') des Gelenkmechanismus und/oder des weiteren Gelenkmechanismus verbunden ist.

13. Einrichtung nach einem der Ansprüche 6 bis 11, **dadurch gekennzeichnet, daß** bei Entfall der Steuerstange (51) die Betätigungsorgane (11, 11') des Gelenkmechanismus (15, 17, 19, 29) und des weiteren Gelenkmechanismus (15', 17', 19', 29') mechanisch aneinander gekoppelt sind.

14. Einrichtung nach Anspruch 13, **dadurch gekennzeichnet, daß** sich die Betätigungsorgane (11, 11') überlappen und jeweils ein Langloch (77) aufweisen und daß durch die deckungsgleich zueinander angeordneten Langlöcher (77) ein Verbindungszapfen (75) geführt ist.

15. Einrichtung nach Anspruch 13, **dadurch gekennzeichnet, daß** sich die Betätigungsorgane (11, 11') überlappen und daß an einem Betätigungsorgan (11) ein Verbindungszapfen (75') befestigt ist und in ein Langloch (77') des anderen Befestigungsorganes (11') eingreift.

16. Einrichtung nach einem der Ansprüche 5 bis 15, **dadurch gekennzeichnet, daß** das Schalenteil (45) sich über mehr als 180° des Umfanges des Ringteiles (13) erstreckt und einen in seiner Umfangsrichtung verlaufenden Schlitz (46) aufweist, durch den hindurch die erste Steuerstange (15, 15') verläuft.

17. Einrichtung nach Anspruch 16, **dadurch gekennzeichnet, daß** der Schlitz (46) an der dem Lenkrad (1) zugewandten Seite des Schalenteiles (45) angeordnet ist.

18. Einrichtung nach einem der Ansprüche 1 bis 17, **dadurch gekennzeichnet, daß** das Schalenteil (45) mit einem Überzugteil (47) versehen ist.

19. Einrichtung nach Anspruch 18, **dadurch gekennzeichnet, daß** das Überzugteil (47) ein polsterndes Teil ist.

20. Einrichtung nach einem der Ansprüche 1 bis 19, **dadurch gekennzeichnet, daß** das Ringteil (13) aus Stahl besteht.

21. Einrichtung nach einem der Ansprüche 2 bis 20, **dadurch gekennzeichnet, daß** das erste Stangenteil (15, 15') so gebogen ist, daß es an den Raum zwischen dem Airbag (9) und dem Nabenteil (5) angepaßt ist.

22. Einrichtung nach einem der Ansprüche 11 bis 21, **dadurch gekennzeichnet, daß** das Potentiometer (69') ein Drehpotentiometer ist, dessen Drehachse (71') drehfest mit dem freien Ende des Stabteiles (29, 29') verbunden ist.

23. Einrichtung nach einem der Ansprüche 1 bis 22, **dadurch gekennzeichnet, daß** der Drehpunkt (17) durch ein erstes Flanschteil (410) gebildet ist, das an dem dem zweiten Stangenteil (19) zugewandten Ende des ersten Stangenteiles (15) befestigt ist, daß das Flanschteil (410) ein Langloch (411) aufweist, durch das ein Stift (512) verläuft der an einem dritten und/oder vierten Flanschteil (510, 511) befestigt ist, die voneinander beabstandet an dem dem ersten Stangenteil (15) zugewandten Ende des zweiten Stangenteiles (19) befestigt sind, daß zwischen dem zweiten und dritten Flanschteil das erste Flanschteil gelagert ist, wobei der Stift (512) bei einer Drehung des zweiten Stangenteiles (19) um die Achse des Stabteiles (29) in dem Langloch (411) gleiten kann, um eine Kraftübertragung vom ersten zum zweiten Stangenteil zu verhindern.

24. Einrichtung nach einem der Ansprüche 1 bis 22, **dadurch gekennzeichnet, daß** der Drehpunkt (17) durch ein erstes Flanschteil gebildet ist, das an dem dem ersten Stangenteil zugewandten Ende des zweiten Stangenteiles befestigt ist, daß das Flanschteil ein Langloch aufweist, durch das ein Stift verläuft der an einem dritten und/oder vierten Flanschteil befestigt ist, die voneinander beabstandet und an dem dem zweiten Stangenteil zugewandten Ende des ersten Stangenteiles befestigt sind, daß zwischen dem zweiten und dritten Flanschteil das erste Flanschteil gelagert ist, wobei der Stift bei einer Drehung des zweiten Stangenteiles um die Achse des Stabteiles in dem Langloch gleiten kann, um eine Kraftübertragung vom ersten zum zweiten Stangenteil zu verhindern.

25. Einrichtung nach einem der Ansprüche 23 oder 24, **dadurch gekennzeichnet, daß** das Langloch parallel zur Längsachse des zweiten Stangenteiles verläuft.

26. Einrichtung nach einem der Ansprüche 23 bis 25, **dadurch gekennzeichnet, daß** das erste und zweite Stangenteil senkrecht zueinander verlaufen.

## Claims

1. An apparatus for manual acceleration in motor vehicles having a steering wheel (1), a hub part (5) connected to the steering wheel (1) and a manual accelerator ring (3) which can be moved against the force of an energy accumulator and which acts on an actuating device (11, 11', 69, 71, 73), with a mechanism (15, 17, 19, 29) being provided between the manual accelerator ring (3) and the actuating device (11, 11', 69, 71, 73),
**characterised in that** an airbag is disposed in the interior space enclosed by the steering wheel (1) and by the hub part (5),
**in that** the manual accelerator ring (3) comprises a ring part (13) securely connected to the mechanism and **in that** the mechanism is disposed in the space between the airbag (9) and the hub part (5).

2. An apparatus according to Claim 1,
**characterised in that** the mechanism (15, 17, 19, 29) is a joint mechanism consisting of a first rod part (15) which is connected by its one end to the ring part (13), a second rod part (19), which pivots with its one end around a pivot (17) and is connected to the other end of the first rod part (15) and a bar part (29),
**in that** the bar part (29) is connected to the end region of the other end of the second rod part (19), extends perpendicularly to the axis of the steering wheel (1) and is pivoted on the hub part (5) around its longitudinal axis.

3. An apparatus according to Claim 2,
**characterised in that** the bar part (29) is mounted in a bore (31) of a retaining block (33) fixed to the hub part (5).

4. An apparatus according to Claim 2 or 3,
**characterised in that** diametrically opposite the joint mechanism (15, 17, 19, 29) on the manual accelerator (3) there is provided another corresponding joint mechanism (15', 17', 19', 29') having a first rod part (15'), a second rod part (19'), a pivot (17') and a bar part (29')

5. An apparatus according to one of Claims 1 to 4,
**characterised in that** an annular shell part (45) is disposed in a freely displaceable manner on the ring part (13) in the circumferential direction thereof.

6. An apparatus according to one of Claims 1 to 5,
**characterised in that** the actuating device (11) takes the form of a part which can be operated by the joint mechanism and which is mechanically coupled to a control rod (51) which is situated in the interior of the steering column (7) of the steering wheel (1).

7. An apparatus according to Claim 6,
**characterised in that** the part is connected with the other end of the second control rod (19, 19') and projects beyond the bar part (29, 29') at the side further from the fulcrum (17, 17') and is mechanically coupled to a head part (53) connected to the control rod (51), which is situated in the space between the region (25) of the hub part (5) surrounding the steering column (7) and the bottom (23) of the airbag (9).

8. An apparatus according to Claim 7,
**characterised in that** the head part (53) comprises a circumferential groove (54) into which a pin (54) connected to the actuating device (11) engages.

9. An apparatus according to Claim 7,
**characterised in that** the head part (53) comprises a transverse bore (154), into which a spherical part (155) connected to the actuating device (11) engages.

10. An apparatus according to Claim 8,
**characterised in that** at its free end the actuating device (11) comprises two parts (61, 61) spaced from one another, which between them accommodate a lateral region of the head part (53) in such a manner that the pin (55) held between them engages in the circumferential groove (54) of the head part (3).

11. An apparatus according to one of Claims 1 to 10,
**characterised in that** to generate an electrical control signal for a drive operating the accelerator pedal an electrical potentiometer (69) coupled to the movement of the joint mechanism is provided as an actuating device.

12. An apparatus according to Claim 11,
**characterised in that** a control arm (71) of the potentiometer (69) is connected to the second control rod (19, 19') or to the actuating device (11, 11') of the joint mechanism and/or of the other joint mechanism.

13. An apparatus according to one of Claims 6 to 11,
**characterised in that** with the absence of the control rod (51) the actuating devices (11, 11') of the joint mechanism (15, 17, 19, 29) and of the other joint mechanism (15', 17', 19', 29') are mechanically coupled to one another.

14. An apparatus according to Claim 13,
**characterised in that** the actuating devices (11, 11') overlap and each comprise a slot (77)
and **in that** a connecting journal (75) is passed through the slots (77) arranged congruently.

15. An apparatus according to Claim 13,
**characterised in that** the actuating devices (11, 11') overlap
and **in that** a connecting journal (75') is fixed to one actuating device (11) and engages in a slot (77') of the other actuating device (11').

16. An apparatus according to one of Claims 5 to 15,
**characterised in that** the shell part (45) extends over more than 180° of the periphery of the ring part (13) and comprises a slit (46) running in its peripheral direction, through which the first control rod (15, 15') passes.

17. An apparatus according to Claim 16,
**characterised in that** the slit (46) is disposed on the side of the shell part (45) closer to the steering wheel (1).

18. An apparatus according to one of Claims 1 to 17,
**characterised in that** the shell part (45) is provided with a covering part (47).

19. An apparatus according to Claim 18,
**characterised in that** the covering part (47) is a padded part.

20. An apparatus according to one of Claims 1 to 19,
**characterised in that** the ring part (13) is made of steel.

21. An apparatus according to one of Claims 2 to 20,
**characterised in that** the first rod part (15, 15') is bent so that it is adapted to the space between the airbag (9) and the hub part (5).

22. An apparatus according to one of Claims 11 to 21,
**characterised in that** the potentiometer (69') is a rotary potentiometer, the axis of rotation (71') is connected firmly to the free end of the bar part (29, 29').

23. An apparatus according to one of Claims 1 to 22,
**characterised in that** the pivot (17) is formed by a first flange part (410), which is fixed to the end of the first rod part (15) closer to the second rod part (15),
**in that** the flange part (410) comprises a slot (411) through which a pin (512) passes which is fixed to a third and/or fourth flange part (510, 511), which are fixed spaced from one another on the end of the second rod part (19) closer to the first rod part (15),
**in that** between the second and third flange parts the first flange part is mounted, with the pin (512) being able to slide in the slot (411) upon a rotation of the second rod part (19) around the axis of the bar part (29) in order to prevent a transmission of force from the first to the second rod part.

24. An apparatus according to one of Claims 1 to 22,
**characterised in that** the pivot (17) is formed by a first flange part which is fixed to the end of the second rod part closer the first rod part,
**in that** the flange part comprises a slot through which a pin runs which is fixed to a third and/or fourth flange part, which are spaced from one another and are fixed to the end of the first rod part closer to the second rod part,
**in that** the first flange part is mounted between the second and third flange parts, with the pin being able to slide in the slot upon a rotation of the second rod part around the axis of the bar part in order to prevent a transmission of force from the first to the second rod part.

25. An apparatus according to one of Claims 23 or 24,
**characterised in that** the slot runs parallel to the longitudinal axis of the second rod part.

26. An apparatus according to one of Claims 23 to 25,
**characterised in that** the first and second rod parts extend perpendicularly to one another.

## Revendications

1. Dispositif pour la commande manuelle de l'accélération dans des véhicules automobiles, avec un volant (1), une partie moyeu (5) liée au volant (1) et un cercle d'accélérateur à main (3) qui peut être déplacé à l'encontre de la force d'un accumulateur d'énergie et agit sur un organe d'actionnement (11, 11', 69, 71, 73), un mécanisme (15, 17, 19, 29) étant prévu entre le cercle d'accélérateur à main (3) et l'organe d'actionnement (11, 11', 69, 71, 73), **caractérisé en ce que** qu'un coussin gonflable est logé dans la chambre intérieure définie par la partie moyeu (5), **en ce que** le cercle d'accélérateur à main (3) comporte une partie cercle (13) qui est solidaire du mécanisme et **en ce que** le mécanisme est disposé dans la chambre entre le coussin gonflable (9) et la partie moyeu (5).

2. Dispositif selon la revendication 1, **caractérisé en ce que** le mécanisme (15, 17, 19, 29) est un mécanisme articulé formé d'un premier élément de tringlerie (15), qui est fixé à la partie cercle (13) par l'une de ses extrémités, d'un deuxième élément de tringlerie (19), qui est lié par l'une de ses extrémités à l'autre extrémité du premier élément de tringlerie (15) avec possibilité de pivotement autour d'un point d'articulation (17), et d'un élément en forme de tige (29), **en ce que** l'élément en forme de tige (29) est lié à la partie terminale de l'autre extrémité du deuxième élément de tringlerie (19), s'étend perpendiculairement à l'axe du volant (1) et est monté sur la partie moyeu (5) avec possibilité de pivotement autour de son axe longitudinal.

3. Dispositif selon la revendication 1, **caractérisé en ce que** l'élément en forme de tige (29) est monté dans un perçage (31) d'un bloc de montage (33) fixé à la partie moyeu (5).

4. Dispositif selon la revendication 2 ou 3, **caractérisé en ce qu'**un mécanisme articulé (15', 17', 19', 29') supplémentaire, similaire, comprenant un premier élément de tringlerie (15'), un deuxième élément de tringlerie (19'), un point d'articulation (17') et un élément en forme de tige (29') est prévu dans une position diamétralement opposée au mécanisme articulé (15, 17, 19, 29).

5. Dispositif selon une des revendications 1 à 4, **caractérisé en ce qu'**un élément formant coquille (45) est disposé sur la partie cercle (13) avec possibilité de coulissement libre dans la direction périphérique de celui-ci.

6. Dispositif selon une des revendications 1 à 5, **caractérisé en ce que** l'organe d'actionnement (11) se présente sous la forme d'un élément actionnable par le mécanisme articulé qui est couplé mécaniquement à une tige de commande (51) disposée à l'intérieur du tube de direction (7) du volant (1).

7. Dispositif selon la revendication 6, **caractérisé en ce que** l'élément est lié à l'autre extrémité du deuxième élément de tringelerie (19, 19') et, du côté éloigné du point d'articulation (17, 17'), s'étend au-delà de l'élément en forme de tige (29, 29') et est couplé mécaniquement à un élément formant tête (53) lié à la tige de commande (51), qui est disposé dans la chambre entre la portion (25) de la partie moyeu (5) entourant le tube de direction (7) et le fond (23) du coussin gonflable (9).

8. Dispositif selon la revendication 7, **caractérisé en ce que** l'élément formant tête (53) comporte une gorge périphérique (54) dans laquelle s'engage un doigt (55) lié à l'organe d'actionnement (11).

9. Dispositif selon la revendication 7, **caractérisé en ce que** l'élément formant tête (53) comporte un trou transversal (154) dans lequel s'engage un élément sphérique (155) lié à l'organe d'actionnement (11).

10. Dispositif selon la revendication 8, **caractérisé en ce que** l'organe d'actionnement (11), à son extrémité libre, présente deux éléments (61, 61) espacés l'un de l'autre, qui enserrent une zone latérale de l'élément formant tête (53), de telle sorte que le doigt (55) tenu entre lesdits éléments pénètre dans la gorge périphérique (54) de l'élément formant tête (3).

11. Dispositif selon une des revendications 1 à 10, **caractérisé en ce que**, pour produire un signal électrique de réglage pour un moyen d'entraînement actionnant la pédale d'accélérateur, il est prévu comme organe d'actionnement un potentiomètre (69) électrique couplé au mouvement du mécanisme articulé.

12. Dispositif selon la revendication 11, **caractérisé en ce qu'**un bras de réglage (71) du potentiomètre (69) est relié à la deuxième tige de commande (19, 19') ou à l'organe d'actionnement (11, 11') du mécanisme articulé et/ou du mécanisme articulé supplémentaire.

13. Dispositif selon une des revendications 6 à 11, **caractérisé en ce qu'**en l'absence de la tige de commande (51) les organes d'actionnement (11, 11') du mécanisme articulé (15, 17, 19, 29) et du mécanisme articulé (15', 17', 19', 29') supplémentaire sont couplés mécaniquement entre eux.

14. Dispositif selon la revendication 13, **caractérisé en ce que** les organes d'actionnement (11, 11') se chevauchent et présentent chacun un trou oblong (77), et **en ce qu'**un axe de liaison (75) est engagé dans les trous oblongs (77) mutuellement alignés.

15. Dispositif selon la revendication 13, **caractérisé en ce que** les organes d'actionnement (11, 11') se chevauchent, et **en ce qu'**un axe de liaison (75) est fixé à l'un des organes d'actionnement (11) et pénètre dans un trou oblong (77') aménagé dans l'autre organe d'actionnement (11').

16. Dispositif selon une des revendications 5 à 15, **caractérisé en ce que** l'élément formant coquille (45) s'étend sur plus de 180° du pourtour de la partie cercle (13) et présente une fente (46) qui s'étend dans sa direction périphérique et dans laquelle est disposée la première tige de commande (15, 15').

17. Dispositif selon la revendication 13, **caractérisé en ce que** la fente (46) est aménagée du côté de l'élément formant coquille (45) tourné vers le volant.

18. Dispositif selon une des revendications 1 à 17, **caractérisé en ce que** l'élément formant coquille (45) est muni d'un élément d'habillage (47).

19. Dispositif selon la revendication 183, **caractérisé en ce que** l'élément d'habillage (47) est un élément rembourré.

20. Dispositif selon une des revendications 1 à 197, **caractérisé en ce que** la partie cercle (13) est en acier.

21. Dispositif selon une des revendications 2 à 20, **caractérisé en ce que** le premier élément de tringlerie (15, 15') est courbé de manière telle qu'il s'adapte à l'espace entre le coussin gonflable (9) et la partie moyeu (5).

22. Dispositif selon une des revendications 11 à 21, **caractérisé en ce que** le potentiomètre (69') est un potentiomètre rotatif, dont l'axe (71') est solidaire en rotation de l'extrémité libre de l'élément en forme de tige (29, 29').

23. Dispositif selon une des revendications 1 à 22, **caractérisé en ce que** le point d'articulation (17) est formé par un premier élément formant flasque (410) fixé à l'extrémité du premier élément de tringlerie (15) tournée vers le deuxième élément de tringlerie (19), **en ce que** l'élément formant flasque (410) comporte un trou oblong (411) dans lequel pénètre un doigt (512) fixé à un troisième et/ou quatrième élément formant flasque (510, 511) qui sont fixés en étant espacés l'un de l'autre à l'extrémité du deuxième élément de tringlerie (19) tournée vers le premier élément de tringlerie (15), **en ce que** le premier élément formant flasque est monté entre les deuxième et troisième éléments formant flasque, le doigt (512), lors d'une rotation du deuxième élément de tringlerie (19) autour de l'axe de l'élément en forme de tige (29), pouvant glisser dans le trou oblong (411) aux fins d'empêcher une transmission d'efforts du premier élément de tringlerie vers le deuxième.

24. Dispositif selon une des revendications 1 à 22, **caractérisé en ce que** le point d'articulation (17) est formé par un premier élément formant flasque fixé à l'extrémité du deuxième élément de tringlerie tournée vers le premier élément de tringlerie, **en ce que** l'élément formant flasque comporte un trou oblong dans lequel pénètre un doigt fixé à un troisième et/ou quatrième élément formant flasque, qui sont fixés en étant espacés l'un de l'autre à l'extrémité du premier élément de tringlerie tournée vers le deuxième élément de tringlerie, **en ce que** le premier élément formant flasque est monté entre les deuxième et troisième éléments formant flasque, le doigt, lors d'une rotation du deuxième élément de tringlerie autour de l'axe de l'élément en forme de tige, pouvant glisser dans le trou oblong (411) aux fins d'empêcher une transmission d'efforts du premier élément de tringlerie vers le deuxième.

25. Dispositif selon une des revendications 23 ou 24, **caractérisé en ce que** le trou oblong s'étend parallèlement à l'axe longitudinal du deuxième élément de tringlerie.

26. Dispositif selon une des revendications 23 à 25, **caractérisé en ce que** les premier et deuxième éléments de tringlerie sont mutuellement perpendiculaires.
